# EUROPÄISCHE PATENTSCHRIFT

(11) **EP 3 835 915 B1**
(45) Veröffentlichungstag und Bekanntmachung des Hinweises auf die Patenterteilung: **26.07.2023**
(21) Anmeldenummer: 20210545.8
(22) Anmeldetag: 30.11.2020
(51) Int. Cl.: G05G 9/047, E03C 1/04, G05G 1/06

(54) **SANITÄRE AUSZUGSSCHLAUCHARMATUR**
SANITARY TAP WITH PULL-OUT HOSE
ROBINET SANITAIRE AVEC TUYAU EXTRAIBLE

(30) Priorität: 12.12.2019 DE 102019219489
(43) Veröffentlichungstag der Anmeldung: 16.06.2021
(73) Patentinhaber: Hansgrohe SE, 77761 Schiltach (DE)
(72) Erfinder: Riester, Patrik, 77709 Wolfach (DE); Stulz, Thomas, 77709 Oberwolfach (DE)
(74) Vertreter: Patentanwälte Ruff, Wilhelm, Beier, Dauster & Partner mbB

(56) Entgegenhaltungen:
- EP-A2- 1 862 601
- DE-A1- 3 338 064
- DE-U1-202010 002 016
- US-A1- 2007 246 550

## Beschreibung

Die Erfindung bezieht sich auf eine sanitäre Auszugsschlaucharmatur, die einen Auszugsschlauch, einen Auslaufkörper mit einem zylinderförmigen Griffabschnitt, der als Handgriff-Nutzerschnittstelle fungiert und an einer ersten Stirnseite eine Wasserauslauföffnung bildet, und einem an den Auszugsschlauch angekoppelten Anschlussabschnitt, ein im Inneren des Griffabschnitts angeordnetes Misch- und Absperrventil und ein nutzerbedientes Ventilbetätigungselement am Griffabschnitt umfasst, das als Ventilbetätigungs-Nutzerschnittstelle fungiert.

Derartige sanitäre Auszugsschlaucharmaturen werden beispielsweise als Wasserauslaufarmaturen für Küchenspülen verwendet. Der Auslaufkörper weist einen vorliegend als Griffabschnitt bezeichneten Abschnitt auf, der dazu bestimmt und eingerichtet ist, vom Benutzer mit einer Hand gegriffen zu werden, d.h. dieser Griffabschnitt fungiert als Handgriff-Nutzerschnittstelle. Der Benutzer kann dann den Auslaufkörper samt Auszugsschlauch aus einem stationär verbleibenden, restlichen Armaturenteil abziehen bzw. herausziehen, wobei der verbleibende Armaturenteil typischerweise als ein Armaturengrundkörper ausgeführt ist, der an oder in der Nähe eines Küchenspülbeckens oder eines Waschtisches oder dergleichen montiert wird.

An der Wasserauslauföffnung gibt die Armatur in gewünschter, vom Benutzer einstellbarer Weise Wasser ab, wobei die Wasserauslauföffnung je nach Bedarf mit einem oder mehreren, die Wasserströmung beeinflussenden Elementen versehen sein kann, um das Wasser beispielsweise als Brausestrahl mit einer oder mehreren Strahlarten abgeben zu können. Der Auslaufkörper ist über seinen Anschlussabschnitt direkt oder indirekt unter Zwischenfügung eines geeigneten Koppelelements an den Auszugsschlauch angekoppelt. Mit dem Misch- und Absperrventil im Inneren des Griffabschnitts lässt sich die Wassermenge und das Mischungsverhältnis z.B. von zugeführtem Kaltwasser und Warmwasser in gewünschter Weise regulieren, wozu das nutzerbediente Ventilbetätigungselement am Griffabschnitt dient, das der Benutzer zu diesem Zweck betätigen kann und das folglich als entsprechende Ventilbetätigungs-Nutzerschnittstelle fungiert.

Bei einer in der Offenlegungsschrift EP 1 884 693 A1 offenbarten sanitären Auszugsschlaucharmatur dieser Art befindet sich der Anschlussabschnitt des Auslaufkörpers an einer der ersten entgegengesetzten zweiten Stirnseite des zylinderförmigen Griffabschnitts, und am Umfang des Griffabschnitts sind ein Betätigungselement zur Umstellung zwischen zwei möglichen Strahlarten und zwei nutzerbediente Ventilbetätigungselemente angeordnet, von denen eines zur Grobeinstellung und das andere zur Feineinstellung der Menge an zugeführtem Kaltwasser und mit diesem zu mischendem Warmwasser dient. Die beiden Ventilbetätigungselemente sind hierbei um eine Zylinderlängsachse des Griffabschnitts drehbar angeordnet.

Die Offenlegungsschrift EP 3 192 930 A1 offenbart eine sanitäre Auszugsschlaucharmatur, die einen Auszugsschlauch und einen Auslaufkörper mit einem zylinderförmigen Griffabschnitt, der als Handgriff-Nutzerschnittstelle fungiert und an einer ersten Stirnseite eine Wasserauslauföffnung bildet, und einem an den Auszugsschlauch angekoppelten Anschlussabschnitt umfasst, der an einer der ersten entgegengesetzten zweiten Stirnseite des Griffabschnitts im Wesentlichen senkrecht zu einer Zylinderlängsachse des Griffabschnitts verlaufend angeordnet ist. Dem Anschlussabschnitt auf dieser zweiten Stirnseite des Griffabschnitts im Wesentlichen gegenüberliegend ist ein nutzerbedientes Ventilbetätigungselement angeordnet, das als kombiniert druck- und drehbetätigbarer elektrischer Steuersignalgeber ausgeführt ist. Dieser dient zur Fernsteuerung eines räumlich entfernt vom Auslaufkörper an einer Eintrittsseite des Auszugsschlauchs angeordneten Misch- und Absperrventils. Ein umfangsseitig am Griffabschnitt des Auslaufkörpers angeordneter, mechanischer Tastschalter dient zur Umstellung zwischen unterschiedlichen Strahlarten.

Die Offenlegungsschrift EP 1 862 601 A2 offenbart eine sanitäre Auszugsschlaucharmatur, die einen Auszugsschlauch und einen Auslaufkörper mit einem zylinderförmigen Griffabschnitt, der als Handgriff-Nutzerschnittstelle fungiert und an einer ersten Stirnseite eine Wasserauslauföffnung bildet, und einem an den Auszugsschlauch angekoppelten Anschlussabschnitt umfasst, der vom zylinderförmigen Griffabschnitt umfangsseitig abkragt. An einer der ersten Stirnseite entgegengesetzten zweiten Stirnseite des Griffabschnitts ist eine axial druckbetätigbare Drucktaste angeordnet. Dieses dient zur Betätigung eines Umstellventils zur Umstellung zwischen zwei unterschiedlichen Strahlarten.

Die Offenlegungsschrift US 2007/0246550 A1 offenbart eine sanitäre Auszugsschlaucharmatur, die einen Auszugsschlauch und einen Auslaufkörper mit einem Griffabschnitt, der als Handgriff-Nutzerschnittstelle fungiert, und einer Wasserauslassöffnung umfasst. Der Auslaufkörper weist weiter einen an den Auszugsschlauch angekoppelten Anschlussabschnitt auf, der stirnseitig vom Griffabschnitt abkragt. Die Wasserauslassöffnung mündet stirnseitig aus einem gekrümmten Stirnendbereich aus. Ein daumenbetätigter, kegelstumpfförmiger Joystick ist umfangsseitig an einem vorderen Ende des Griffabschnitts beweglich angeordnet und dient als Nutzerschnittstelle einer elektrischen Steuereinheit, die zur Einstellung einer definierten Temperatur und Durchflussmenge des Wasserstrahls mindestens ein Ventil außerhalb des Auslaufkörpers steuert.

Der Erfindung liegt als technisches Problem die Bereitstellung einer sanitären Auszugsschlaucharmatur der eingangs genannten Art zugrunde, die gegenüber dem oben erläuterten Stand der Technik hinsichtlich ihrer Fluidführungsfunktionalität, ihrer Handhabung und/oder ihres Herstellungsaufwands Vorteile bietet.

Die Erfindung löst dieses Problem durch die Bereitstellung einer sanitären Auszugsschlaucharmatur mit den Merkmalen des Anspruchs 1. Bei dieser Auszugsschlaucharmatur kragt der an den Auszugsschlauch angekoppelte Anschlussabschnitt vom zylinderförmigen Griffabschnitt umfangsseitig ab, und das nutzerbediente, als Ventilbetätigungs-Nutzerschnittstelle fungierende Ventilbetätigungselement ist an einer der ersten Stirnseite, an der sich die Wasserauslauföffnung befindet, entgegengesetzten zweiten Stirnseite des Griffabschnitts um zwei Schwenkachsen verschwenkbar angeordnet, von denen eine erste Schwenkachse mit zu einer Zylinderlängsachse des Griffabschnitts paralleler Hauptrichtungskomponente und eine zweite Schwenkachse mit zu der Zylinderlängsachse des Griffabschnitts senkrechter Hauptrichtungskomponente verläuft. Unter Hauptrichtungskomponente ist hierbei jeweils wie üblich zu verstehen, dass die Schwenkachse in der betreffenden Richtung mit größerer Richtungskomponente als senkrecht dazu verläuft. Mit anderen Worten verläuft die erste Schwenkachse mehr in Richtung Zylinderlängsachse des Griffabschnitts als senkrecht dazu, und die zweite Schwenkachse verläuft mehr in Richtung senkrecht zu der Zylinderlängsachse als in der zu dieser wiederum senkrechten Richtung parallel zur Zylinderlängsachse des Griffabschnitts.

Diese Eigenschaften des Auslaufkörpers und des Ventilbetätigungselements ermöglichen eine vorteilhafte Fluidführung, stellen eine günstige und ergonomische Haptik für den Auslaufkörper zur Verfügung und ermöglichen eine optimal einfache Bedienung des Misch- und Absperrventils durch den Benutzer über das Ventilbetätigungselement. Da sich das Ventilbetätigungselement an der Stirnseite gegenüberliegend der Wasserauslauföffnung befindet und der Anschlussabschnitt umfangsseitig vom Griffabschnitt abkragt, kann der Benutzer den zylinderförmigen Griffabschnitt sehr leicht so umgreifen, dass er mit dem Daumen und/oder dem Zeigefinger dieser Hand in ergonomisch günstiger Weise das Ventilbetätigungselement bedienen kann. Diese Einhand-Fingerbetätigbarkeit des Ventilbetätigungselements zum Einstellen der Menge und des Mischungsverhältnisses für das Misch- und Absperrventil bzw. das von diesem gelieferte Wasser wird durch die Verschwenkbarkeit des Ventilbetätigungselements um die beiden zueinander nicht-parallelen Schwenkachsen unterstützt. Diese Verschwenkbarkeit ermöglicht eine Bedienbarkeit des Ventilbetätigungselements nach Art eines Joystick-Betätigungselements. Dabei kann beispielsweise die Verschwenkung um die eine Schwenkachse zur Mengenregulierung und die Verschwenkung um die andere Schwenkachse zur Regulierung des Mischungsverhältnisses dienen.

Bei der erfindungsgemäßen sanitären Auszugsschlaucharmatur beinhaltet das Ventilbetätigungselement einen Bedienkörper mit einer Daumenbetätigungsmulde, worunter eine Mulde zu verstehen ist, die sich im Aktionsbereich des Daumens der dem Griffabschnitt des Auslaufkörpers bestimmungsgemäß greifenden Hand eines Benutzers befindet. Dies ermöglicht eine Bedienbetätigung des Ventils durch den Benutzer allein mit dem Daumen der den Griffabschnitt greifenden Hand, z.B. nach Art einer Einfinger-Joystickbetätigung. In alternativen Ausführungen kann das Ventilbetätigungselement einen Bedienkörper aufweisen, der anstelle der Mulde eine geriffelte oder sonstige, im Wesentlichen plane Fläche, einen Fortsatz oder dergleichen beinhaltet, die/der mit dem Daumen oder einem anderen Finger vorzugsweise der den Griffabschnitt des Auslaufkörpers greifenden Hand eines Benutzers betätigt werden kann. In einer Weiterbildung der Erfindung weist der Anschlussabschnitt zwei getrennte, koaxiale Fluideintritte auf. Diese sind zur einfachen Ankopplung an den Auszugsschlauch von Vorteil, wenn dieser eine koaxiale Fluidführungsstruktur besitzt. In alternativen Ausführungen kann der Anschlussabschnitt z.B. zwei quer zur Hauptströmungsrichtung der zugeführten Fluide, wie Kaltwasser und Warmwasser, versetzt angeordnete Fluideintritte besitzen.

In einer Weiterbildung der Erfindung weist der Auszugsschlauch zwei getrennte, koaxiale Fluidführungen auf, wie zum getrennten Führen von Kaltwasser und Warmwasser. Eine solche Konfiguration des Auszugsschlauchs kann z.B. hinsichtlich kompakter Bauform des Auszugsschlauchs quer zu seiner Schlauchlängsrichtung für entsprechende Anwendungen von Vorteil sein. In alternativen Ausführungen kann der Auszugsschlauch z.B. zwei quer zur Schlauchlängsrichtung versetzt angeordnete Fluidführungen beinhalten.

In einer Ausgestaltung der Erfindung beinhaltet die Auszugsschlaucharmatur einen zylinderförmigen Schlauchanschlusskörper an demjenigen Ende des Auszugsschlauchs, das dem Anschlussabschnitt des Auslaufkörpers entgegengesetzt ist, wobei der Schlauchanschlusskörper zwei getrennte Fluidführungen aufweist, die in einem schlauchzugewandten Abschnitt des Schlauchanschlusskörpers koaxial zueinander und in einem schlauchabgewandten Abschnitt des Schlauchanschlusskörpers lateral gegeneinander versetzt verlaufen. Mit diesem Schlauchanschlusskörper kann der Auszugsschlauch in einer Realisierung mit koaxialen Fluidführungen vorteilhaft einfach an eine vorgeschaltete, z.B. Kaltwasser und Warmwasser getrennt in einer Ausführung mit lateral gegeneinander versetzten Fluidführungen führende Komponente angekoppelt werden. In einer alternativen Ausführung verlaufen zwei getrennte Fluidführungen des Schlauchanschlusskörpers in einem schlauchabgewandten Abschnitt des Schlauchanschlusskörpers koaxial zueinander und in einem schlauchzugewandten Abschnitt des Schlauchanschlusskörpers lateral gegeneinander versetzt. Damit kann dann der Auszugsschlauch in einer Realisierung mit lateral gegeneinander versetzten Fluidführungen an die stromaufwärts anschließende Komponente in einer Ausführung mit koaxialen Fluidführungen gekoppelt werden. In weiteren alternativen Ausführungen der Auszugsschlaucharmatur ist der Auszugsschlauch direkt an die stromaufwärts anschließende Komponente angekoppelt.

In einer Weiterbildung der Erfindung befindet sich die Daumenbetätigungsmulde auf einem dem Anschlussabschnitt entgegengesetzten Seitenbereich des Bedienkörpers. Dies macht die Einfingerbetätigung des Ventils durch den Benutzer mit dem Daumen besonders einfach und ergonomisch. Der Benutzer kann den Griffabschnitt so greifen, dass sich die Handfläche gegen den nicht vom abkragenden Anschlussabschnitt belegten Umfangsbereich des Griffabschnitts anlegt, wodurch der Benutzer seinen Daumen bequem gegen die Daumenbetätigungsmulde anlegen kann, da sich diese auf demjenigen Seitenbereich des Bedienkörpers befindet, der dem Anschlussabschnitt entgegengesetzt ist.

In einer Ausgestaltung der Erfindung steht die Daumenbetätigungsmulde radial gegenüber einer Zylinderaußenumfangsfläche des Griffabschnitts nach außen vor. Dies stellt eine ergonomisch günstige Maßnahme für die Anordnung des Bedienkörpers des Ventilbetätigungselements mit seiner Daumenbetätigungsmulde dar. In alternativen Ausführungen kann die Daumenbetätigungsmulde radial gegenüber der Zylinderaußenumfangsfläche des Griffabschnitts nach innen zurückgesetzt verlaufen.

In einer Ausgestaltung der Erfindung verläuft eine Normalenrichtung der Daumenbetätigungsmulde in einer Geschlossenstellung des Misch- und Absperrventils unter einem spitzen Winkel schräg zur Zylinderlängsachse des Griffabschnitts. Diese Lage bzw. Orientierung der Daumenbetätigungsmulde erleichtert eine ergonomisch günstige Bedienung des Bedienkörpers durch den Benutzer mit dem Daumen der den zylinderförmigen Griffabschnitt umgreifenden Hand.

In einer Ausgestaltung der Erfindung besitzt der Bedienkörper eine haubenförmige Außenkontur mit einer rechteckförmigen Oberseite, einem kreisrunden Unterseitenrand, zwei entgegengesetzten Schmalseitenflächen und zwei entgegengesetzten Breitseitenflächen sowie einen von einer der beiden Breitseitenflächen abstehenden Daumenbetätigungsfortsatz, an dem die Daumenbetätigungsmulde ausgebildet ist. Diese Ausführung des Bedienkörpers bietet weitergehende haptische und ergonomische Vorteile und schafft zudem einen günstigen Übergang vom stirnseitigen Ventilbetätigungselement zum angrenzenden Bereich des zylinderförmigen Griffabschnitts des Auslaufkörpers. Weiter kann diese Ausführung auch gestalterische Vorteile bieten. In alternativen Ausführungen besitzt der Bedienkörper eine andersartige Außenkontur, z.B. eine zylindrische, kegelförmige oder halbkugelige Außenkontur. In weiteren alternativen Ausführungen befindet sich die Daumenbetätigungsmulde in einem anderen Seitenbereich des Bedienkörpers, z.B. in einem gegenüber dem Anschlussabschnitt um 90° versetzten Seitenbereich.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:

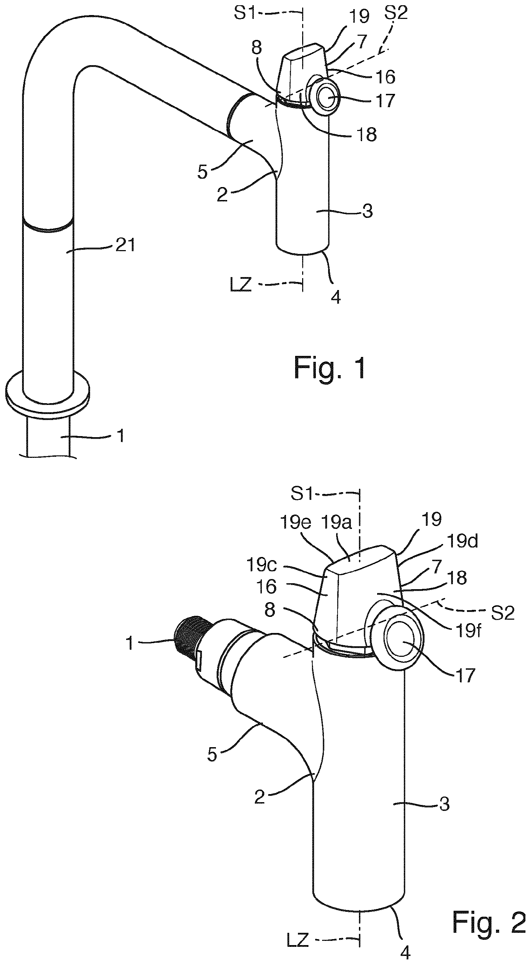

- Fig. 1: eine Perspektivansicht eines Teils einer sanitären Auszugsschlaucharmatur mit Auszugsschlauch, Auslaufkörper, Misch- und Absperrventil und Ventilbetätigungselement,
- Fig. 2: eine Perspektivansicht des Auslaufkörpers der Armatur von Fig. 1,
- Fig. 3: eine Längsschnittansicht des Auslaufkörpers,
- Fig. 4: eine Detailansicht eines fluideintrittsseitigen Bereichs des Auslaufkörpers von Fig. 3,
- Fig. 5: eine Längsschnittansicht eines Schlauchanschlusskörpers zum Ankoppeln an den Auszugsschlauch am dem Auslaufkörper entgegengesetzten Schlauchende,
- Fig. 6: eine Teilansicht der Perspektivdarstellung von Fig. 2 mit dem Ventilbetätigungselement in einer Schließstellung des Ventils,
- Fig. 7: die Ansicht von Fig. 6 in einer Mischwasser-Ventiloffenstellung,
- Fig. 8: die Ansicht von Fig. 6 in einer Warmwasser-Ventiloffenstellung und
- Fig. 9: die Ansicht von Fig. 6 in einer Kaltwasser-Ventiloffenstellung.

Die in den Figuren gezeigte sanitäre Auszugsschlaucharmatur umfasst einen Auszugsschlauch 1, einen Auslaufkörper 2 mit einem zylinderförmigen Griffabschnitt 3, einen im Inneren des Griffabschnitts 3 angeordneten Misch- und Absperrventil 6 und ein nutzerbedientes Ventilbetätigungselement 7 am Griffabschnitt 3. Des Weiteren beinhaltet der Auslaufkörper 2 einen an den Auszugsschlauch 1 angekoppelten Anschlussabschnitt 5. Der Anschlussabschnitt 5 kragt umfangsseitig vom Griffabschnitt 3 ab, d.h. an dessen Zylinderumfang, z.B. wie gezeigt etwa rechtwinklig zu einer Zylinderlängsachse Lz des Griffabschnitts 3 oder alternativ schräg dazu.

Der zylinderförmige Griffabschnitt 3 fungiert als Handgriff-Nutzerschnittstelle, d.h. der Benutzer kann den Auslaufkörper 2 mit einer Hand am zylinderförmigen Griffabschnitt 3 greifen, um in an sich üblicher Weise den Auslaufkörper 2 samt angekoppeltem Auszugsschlauch 1 aus einem stationär verbleibenden, restlichen Armaturenteil 21 herauszuziehen bzw. wieder in diesen zurückzubewegen. Der stationäre Armaturenteil 21 kann beispielsweise als ein Armaturengrundkörper ausgeführt sein, der an oder in der Nähe eines Küchenspülbeckens oder eines Waschtischs oder dergleichen montiert wird.

Der zylinderförmige Griffabschnitt 3 bildet an einer ersten Stirnseite 4 eine Wasserauslauföffnung, an der die Armatur in gewünschter, vom Benutzer einstellbarer Weise Wasser abgeben kann, beispielsweise als Brausestrahl mit einer oder mehreren Strahlarten. Dazu kann die Wasserauslauföffnung in an sich bekannter Weise, was daher hier keiner näheren Erläuterungen bedarf, mit einem oder mehreren, die Wasserströmung beeinflussenden Elementen versehen sein, wie einem Strahlreglerelement, einem Luftsprudlerelement, einem Partikelsieb und/oder einer Brausestrahlscheibe.

Das Misch- und Absperrventil 6 im Inneren des Griffabschnitts 3 ist von einer beliebigen, an sich bekannten Bauart, was daher hier keiner näheren Erläuterungen bedarf. Es ist dafür eingerichtet, mindestens zwei getrennt zugeführte Fluide, wie Kaltwasser und Warmwasser, in einem vom Benutzer einstellbaren Mischungsverhältnis zu mischen und das dadurch resultierende Mischfluid in ebenfalls vom Benutzer einstellbarer Menge abzugeben.

Um diese Nutzerbedienbarkeit des Misch- und Absperrventils 6 bereitzustellen, ist am Griffabschnitt 3 das nutzerbediente Ventilbetätigungselement 7 vorgesehen, das dementsprechend als Ventilbetätigungs-Nutzerschnittstelle fungiert. Das Ventilbetätigungselement 7 ist dabei an einer der ersten Stirnseite 4 des Griffabschnitts 3 entgegengesetzten zweiten Stirnseite 8 des Griffabschnitts 3 um zwei Schwenkachsen S1, S2 verschwenkbar angeordnet, von denen eine erste Schwenkachse S1 mit zu einer Zylinderlängsachse Lz des Griffabschnitts 3 paralleler Hauptrichtungskomponente und eine zweite Schwenkachse S2 mit zu der Zylinderlängsachse Lz des Griffabschnitts 3 senkrechter Hauptrichtungskomponente verläuft. Dies bedeutet, dass in Projektion auf die Zylinderlängsachse Lz die erste Schwenkachse S1 eine größere Richtungskomponente parallel zur Zylinderlängsachse Lz als senkrecht dazu aufweist, während die zweite Schwenkachse S2 eine größere Richtungskomponente senkrecht zur Zylinderlängsachse Lz als parallel dazu besitzt. In entsprechenden Ausführungen verläuft die erste Schwenkachse S1 parallel oder in einem Winkel kleiner als 45° schräg zur Zylinderlängsachse Lz, während die zweite Schwenkachse S2 senkrecht oder unter einem Winkel zwischen 45° und 90° schräg zur Zylinderlängsachse Lz verläuft.

Insgesamt ergibt sich durch diese Ausführung der Auszugsschlaucharmatur und insbesondere des Ventilbetätigungselements 7 in Kombination mit dem zylinderförmigen Griffabschnitt 3 des Auslaufkörpers 2 eine sehr vorteilhafte Haptik und Ergonomie für den Benutzer bei der Benutzung der Armatur und insbesondere beim Ausziehen des Auszugsschlauchs 1 und der Bedienung des Misch- und Absperrventils 6 im Auslaufkörper 2 über das Ventilbetätigungselement 7. Insbesondere kann das Ventilbetätigungselement 7 hierbei aufgrund seiner Verschwenkbarkeit um die beiden nicht-parallelen Schwenkachsen S1, S2 nach Art eines Joysticks betätigt werden.

In vorteilhaften Ausführungsformen weist der Auszugsschlauch 1, wie im gezeigten Beispiel, zwei getrennte, koaxiale Fluidführungen 11, 12 auf. Dies ermöglicht eine getrennte, koaxiale Führung zweier Fluide, z.B. von Kaltwasser und Warmwasser, im Auszugsschlauch 1. In alternativen Ausführungen weist der Auszugsschlauch 1 zwei getrennte, nicht-koaxiale Fluidführungen auf, z.B. zwei lateral, d.h. in Querrichtung senkrecht zur Schlauchlängsrichtung, versetzt angeordnete Fluidführungen.

In vorteilhaften Ausführungsformen weist der Anschlussabschnitt 5, wie im gezeigten Beispiel, zwei getrennte, koaxiale Fluideintritte 9, 10 auf. Dies ermöglicht eine einfache, direkte Ankopplung des Auszugsschlauchs 1 in der Ausführung mit den koaxialen Fluidführungen 11, 12. In alternativen Realisierungen weist der Anschlussabschnitt 5 zwei getrennte, nicht-koaxiale Fluideintritte auf, z.B. zwei quer zur Hauptströmungsrichtung der zugeführten Fluide versetzt angeordnete Fluideintritte.

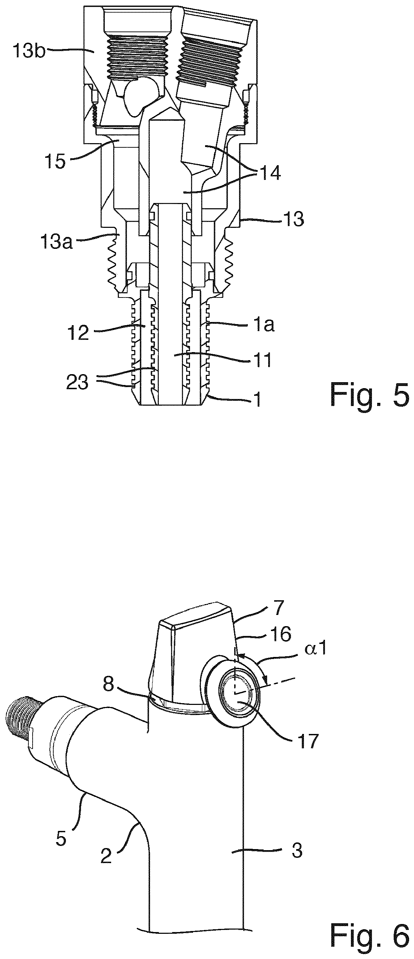

In entsprechenden Ausführungen beinhaltet die Auszugsschlaucharmatur, wie im gezeigten Beispiel, einen zylinderförmigen Schlauchanschlusskörper 13 an einem dem Anschlussabschnitt 5 des Auslaufkörpers 2 entgegengesetzten Ende 1a des Auszugsschlauchs 1. Der Schlauchanschlusskörper 13 beinhaltet zwei getrennte Fluidführungen 14, 15, die in einem schlauchzugewandten Abschnitt 13a des Schlauchanschlusskörpers 13 koaxial zueinander und in einem schlauchabgewandten Abschnitt 13b des Schlauchanschlusskörpers 13 lateral, d.h. quer zur Hauptströmungsrichtung der in ihm geführten Fluide, gegeneinander versetzt verlaufen, wie aus der Schnittansicht von Fig. 5 ersichtlich. Der so konfigurierte Schlauchanschlusskörper 13 kann vorteilhaft als Adapter zum Anschluss des Auszugsschlauchs 1 in der Ausführung mit koaxialen Fluidführungen 11, 12 an eine vorgeschaltete Komponente dienen, welche die beide Fluide, wie Kaltwasser und Warmwasser, an zwei entsprechend in Querrichtung versetzten Anschlüssen bereitstellt.

Der Auszugsschlauch 1 ist optional an seinem dem Anschlussabschnitt 5 des Auslaufkörpers 2 zugewandten Ende 1b und/oder an seinem entgegengesetzten Ende 1a jeweils mit einem Anschlussnippel 22, 23 von an sich bekannter Bauart versehen. Weiter optional ist der Auszugsschlauch 1 ggf. samt Anschlussnippel 22, 23 mittels einer Überwurfmutter 24 am Anschlussabschnitt 5 des Auslaufkörpers 2 bzw. am Schlauchanschlusskörper 13 gehalten.

Das Ventilbetätigungselement 7 beinhaltet einen Bedienkörper 16 mit einer Daumenbetätigungsmulde 17. Die Daumenbetätigungsmulde 17 befindet sich in vorteilhaften Ausführungen, wie im gezeigten Beispiel, auf einem dem Anschlussabschnitt 5 des Auslaufkörpers 2 entgegengesetzten Seitenbereich 18 des Bedienkörpers 16. Alternativ befindet sich die Daumenbetätigungsmulde 17 z.B. in einem gegenüber dem Anschlussabschnitt 5 um 90° versetzten Seitenbereich des Bedienkörpers 16.

In vorteilhaften Realisierungen beinhaltet der Bedienkörper 16, wie im gezeigten Beispiel, eine haubenförmige Außenkontur 19 mit einer rechteckförmigen Oberseite 19a, einem kreisrunden Unterseitenrand 19b, zwei entgegengesetzten Schmalseitenflächen 19c, 19d und zwei entgegengesetzten Breitseitenflächen 19e, 19f sowie einen von einer der beiden Breitseitenflächen 19e, 19f, im gezeigten Beispiel der Breitseitenfläche 19f, auf der dem Anschlussabschnitt 5 des Auslaufkörpers 2 entgegengesetzten Seite, abstehenden Daumenbetätigungsfortsatz 20, an dem die Daumenbetätigungsmulde 17 ausgebildet ist.

Vorzugsweise schließt der Bedienkörper 16 hierbei mit seinem kreisrunden Unterseitenrand 19b im Wesentlichen fluchtend an den Stirnaußenrand des zylinderförmigen Griffabschnitts 3 an dessen betreffender zweiter Stirnseite 8 an. Vorzugsweise steht die Daumenbetätigungsmulde 17 gegenüber dem Außenrand des zylindrischen Griffabschnitts 3 und dem kreisrunden Unterseitenrand 19b der haubenförmigen Außenkontur 19 des Bedienkörpers 16 radial nach außen vor. Dies kann die Bedienung des Bedienkörpers 16 durch den Benutzer mit seinem Daumen weiter erleichtern.

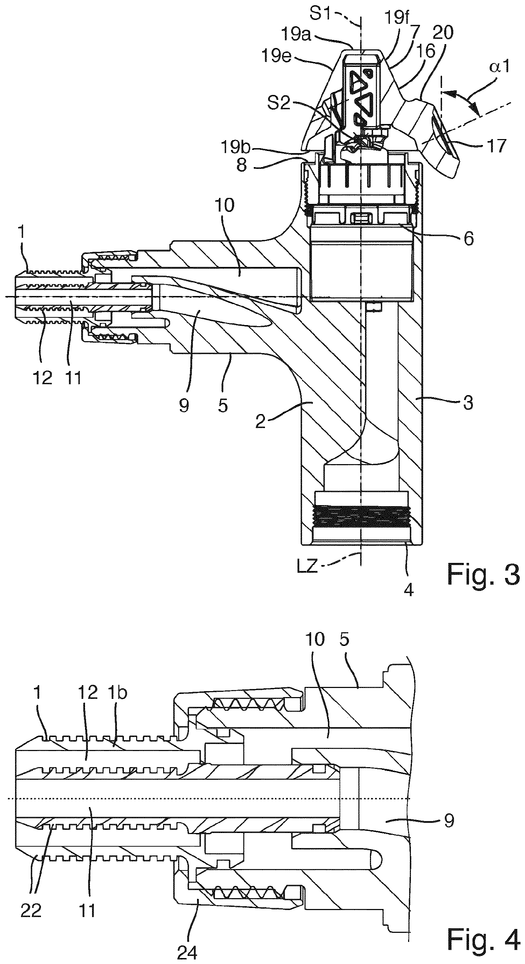

In einer vorteilhaften Ausführung verläuft, wie im gezeigten Beispiel, eine Normalenrichtung Nₘ der Daumenbetätigungsmulde 17 in einer in den Fig. 3 und 6 gezeigten Geschlossenstellung des Misch- und Absperrventils 6 unter einem spitzen Winkel α1 schräg zur Zylinderlängsachse Lz des Griffabschnitts 3. Diese Lage bzw. Orientierung der Daumenbetätigungsmulde 17 begünstigt eine ergonomisch günstige Bedienung des Bedienkörpers 16 durch den Benutzer mit seinem entsprechenden Daumen.

Die Fig. 6 bis 9 veranschaulichen die Betätigungscharakteristik für die Betätigung des Misch- und Absperrventils 6 durch den Benutzer über das Ventilbetätigungselement 7 in der Realisierung mit dem Bedienkörper 16. Dabei zeigt Fig. 6 ebenso wie Fig. 3 die Stellung des Ventilbetätigungselements 7 und damit des Bedienkörpers 16, wenn sich das Misch- und Absperrventil 6 in seiner Geschlossenstellung, d.h. seiner vollständigen Absperrstellung, befindet. Der Bedienkörper 16 befindet sich in diesem Fall in seiner um die zweite Schwenkachse S2 am weitesten entgegen dem Uhrzeigersinn verschwenkten Endlage.

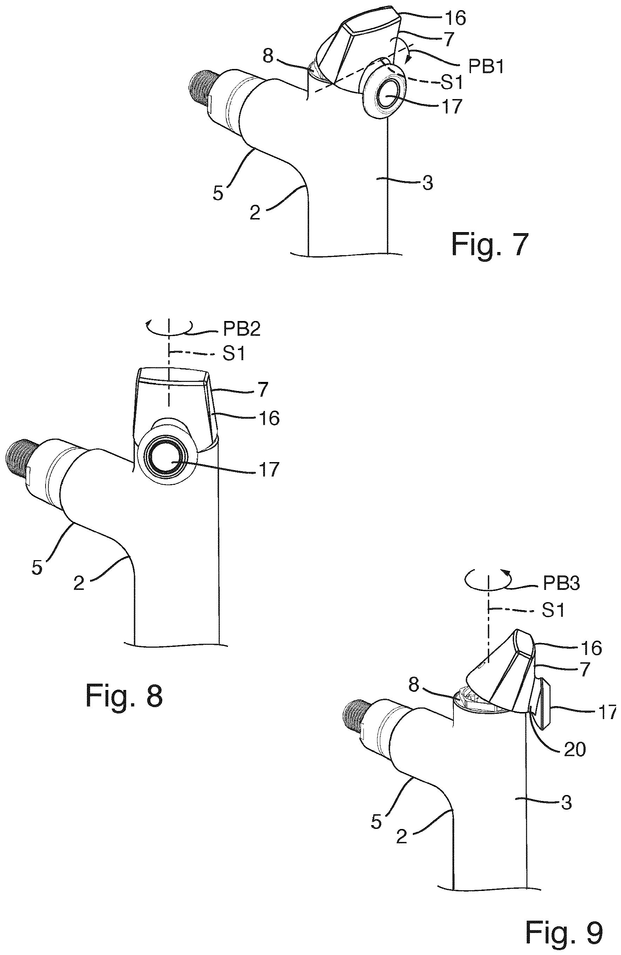

Fig. 7 zeigt die Armatur, d.h. genauer den Auslaufkörper 2, in einer maximalen Mischwasser-Offenstellung des Misch- und Absperrventils 6. Das Ventilbetätigungselement 7 bzw. der Bedienkörper 16 ist in diesem Fall gegenüber der Geschlossenstellung von Fig. 6 um die zweite Schwenkachse S2 im Uhrzeigersinn in die zugehörige Endlage gekippt bzw. verschwenkt, was der Benutzer dadurch bewirken kann, dass er mit dem an die Daumenbetätigungsmulde 17 angelegten Daumen seiner den Griffabschnitt 3 greifenden Hand den Bedienkörper 16 an der Daumenbetätigungsmulde 17 nach unten drückt. Dies ist mit einem Schwenkbetätigungspfeil PB1 symbolisiert.

In der Situation von Fig. 8 befindet sich das Misch- und Absperrventil 6 in seiner maximalen Warmwasser-Offenstellung. Dazu verschwenkt der Benutzer z.B. ausgehend von der Stellung von Fig. 7 den Bedienkörper 16 im Uhrzeigersinn um die erste Schwenkachse S1, wie mit einem Betätigungspfeil PB2 symbolisiert.

Fig. 9 zeigt die Situation mit dem Misch- und Absperrventil 6 in der maximalen Kaltwasser-Offenstellung. Diese Stellung erreicht der Benutzer z.B. ausgehend von der maximalen Mischwasser-Offenstellung von Fig. 7 durch Verschwenken des Bedienkörpers 16 entgegen des Uhrzeigersinns um die erste Schwenkachse S1, wie mit einem Betätigungspfeil PB3 symbolisiert.

Wir anhand der obigen Erläuterungen zu den Fig. 6 bis 9 deutlich wird, ermöglicht die Auszugsschlaucharmatur durch die Gestaltung des Auslaufkörpers 2 mit dem zylinderförmigen Griffabschnitt 3 und dem Ventilbetätigungselement 7 auf der zur Wasserauslassöffnung entgegengesetzten Stirnseite des Griffabschnitts 3 eine sehr bequeme Bedienbetätigung des Misch- und Absperrventils 6 sowohl hinsichtlich dessen Absperrfunktion als auch dessen Mischfunktion allein mit dem Daumen dieser Hand, ohne einen weiteren Finger oder die andere Hand zu benötigen. Der Benutzer kann den Griffabschnitt 3 mit einer Hand so greifen, dass sich die Handfläche im Wesentlichen auf dem Seitenbereich 18 des Griffabschnitts 3 entgegengesetzt vom Anschlussabschnitt 5 befindet. Er kann dann seinen Daumen dieser Hand bequem gegen die Daumenbetätigungsmulde 17 des Bedienkörpers 16 anlegen und allein mit dem Daumen den Bedienkörper 16 nach Art eines Joysticks betätigen.

Wie die gezeigten und die weiteren oben erläuterten Ausführungsbeispiele deutlich machen, stellt die Erfindung somit eine sanitäre Auszugsschlaucharmatur zur Verfügung, die haptische und ergonomische Vorteile bei gleichzeitig günstiger Fluidführungsfunktionalität bietet. Zudem ist die Armatur mit relativ geringem Aufwand herstellbar, da sie sich, wenn gewünscht, mit relativ einfach gestalteten Teilen bauen lässt, bei Bedarf in einer vergleichsweise kompakten Bauform. Die sanitäre Auszugsschlaucharmatur ist insbesondere für Küchenspülen verwendbar, jedoch auch für andere Anwendungen geeignet, z.B. an Waschtischen und anderen Bad- und Duschsystemen, die mit einer wasserliefernden Armatur mit ausziehbarem Schlauch ausgerüstet sind.

## Patentansprüche

1. Sanitäre Auszugsschlaucharmatur mit
- einem Auszugsschlauch (1),
- einem Auslaufkörper (2) mit einem zylinderförmigen Griffabschnitt (3), der als Handgriff-Nutzerschnittstelle fungiert und an einer ersten Stirnseite (4) eine Wasserauslauföffnung bildet, und einem an den Auszugsschlauch angekoppelten Anschlussabschnitt (5),
- einem im Inneren des Griffabschnitts angeordneten Misch- und Absperrventil (6) und
- einem nutzerbedienten Ventilbetätigungselement (7) am Griffabschnitt, das als Ventilbetätigungs-Nutzerschnittstelle fungiert,
**dadurch gekennzeichnet, dass**
- der Anschlussabschnitt (5) vom Griffabschnitt (3) umfangsseitig abkragt,
- das Ventilbetätigungselement (7) an einer der ersten entgegengesetzten zweiten Stirnseite (8) des Griffabschnitts um zwei Schwenkachsen (S1, S2) verschwenkbar angeordnet ist, von denen eine erste Schwenkachse (S1) mit zu einer Zylinderlängsachse (Lz) des Griffabschnitts paralleler Hauptrichtungskomponente und eine zweite Schwenkachse (S2) mit zu der Zylinderlängsachse des Griffabschnitts senkrechter Hauptrichtungskomponente verläuft, und
- das Ventilbetätigungselement (7) einen Bedienkörper (16) mit einer Daumenbetätigungsmulde (17) aufweist.

2. Sanitäre Auszugsschlaucharmatur nach Anspruch 1, weiter **dadurch gekennzeichnet, dass** der Anschlussabschnitt zwei getrennte, koaxiale Fluideintritte (9, 10) aufweist.

3. Sanitäre Auszugsschlaucharmatur nach Anspruch 1 oder 2, weiter **dadurch gekennzeichnet, dass** der Auszugsschlauch zwei getrennte, koaxiale Fluidführungen (11, 12) aufweist.

4. Sanitäre Auszugsschlaucharmatur nach Anspruch 3, weiter **gekennzeichnet durch** einen zylinderförmigen Schlauchanschlusskörper (13) an einem dem Anschlussabschnitt des Auslaufkörpers entgegengesetzten Ende (1a) des Auszugsschlauchs, wobei der Schlauchanschlusskörper zwei getrennte Fluidführungen (14, 15) aufweist, die in einem schlauchzugewandten Abschnitt (13a) des Schlauchanschlusskörpers koaxial zueinander und in einem schlauchabgewandten Abschnitt (13b) des Schlauchanschlusskörpers lateral gegeneinander versetzt verlaufen.

5. Sanitäre Auszugsschlaucharmatur nach einem der Ansprüche 1 bis 4, weiter **dadurch gekennzeichnet, dass** sich die Daumenbetätigungsmulde auf einer dem Anschlussabschnitt entgegengesetzten Seitenbereich (18) des Bedienkörpers befindet.

6. Sanitäre Auszugsschlaucharmatur nach Anspruch 5, weiter **dadurch gekennzeichnet, dass** die Daumenbetätigungsmulde radial gegenüber einer Zylinderaußenumfangsfläche des Griffabschnitts nach außen vorsteht.

7. Sanitäre Auszugsschlaucharmatur nach Anspruch 5 oder 6, weiter **dadurch gekennzeichnet, dass** eine Normalenrichtung (Nₘ) der Daumenbetätigungsmulde in einer Geschlossenstellung des Misch- und Absperrventils unter einem spitzen Winkel (α1) schräg zur Zylinderlängsachse des Griffabschnitts verläuft.

8. Sanitäre Auszugsschlaucharmatur nach einem der Ansprüche 5 bis 7, weiter **dadurch gekennzeichnet, dass** der Bedienkörper eine haubenförmige Außenkontur (19) mit einer reckteckförmigen Oberseite (19a), einem kreisrunden Unterseitenrand (19b), zwei entgegengesetzten Schmalseitenflächen (19c, 19d) und zwei entgegengesetzten Breitseitenflächen (19e, 19f) sowie einen von einer der beiden Breitseitenflächen abstehenden Daumenbetätigungsfortsatz (20) aufweist, an dem die Daumenbetätigungsmulde ausgebildet ist.

## Claims

1. Sanitary pull-out hose fitting, comprising
- a pull-out hose (1),
- an outlet body (2) having a cylindrical handle portion (3) which functions as a handle-user interface and provides a water outlet opening on a first face side (4), and having a connecting portion (5) coupled to the pull-out hose,
- a mixing and shut-off valve (6) disposed within the handle portion, and
- a user-operated valve actuation element (7) on the handle portion, which element functions as a valve actuation-user interface,
**characterized in that**
- the connecting portion (5) projects circumferentially from the handle portion (3),
- the valve actuation element (7) is arranged on a second face side (8) of the handle portion, opposite to the first face side, to be pivotable about two pivot axes (S1, S2), thereof a first pivot axis (S1) extending with a main direction component parallel to a cylinder longitudinal axis (Lz) of the handle portion and a second pivot axis (S2) extending with a main direction component perpendicular to the cylinder longitudinal axis of the handle portion, and
- the valve actuation element includes an operating body (16) having a thumb actuation depression (17).

2. Sanitary pull-out hose fitting according to claim 1, further **characterized in that** the connecting portion comprises two separate, coaxial fluid inlets (9, 10).

3. Sanitary pull-out hose fitting according to claim 1 or 2, further **characterized in that** the pull-out hose comprises two separate, coaxial fluid guidings (11, 12).

4. Sanitary pull-out hose fitting according to claim 3, further **characterized by** a cylindrical hose connector body (13) on an end (1a) of the pull-out hose opposite to the connecting portion of the outlet body, wherein the hose connector body comprises two separate fluid guidings (14, 15) extending coaxially to each other in a portion (13a), facing the hose, of the hose connector body, and extending laterally offset to each other in a portion (13b), facing away from the hose, of the hose connector body.

5. Sanitary pull-out hose fitting according to any one of claims 1 to 4, further **characterized in that** the thumb actuation depression is located on a lateral region (18) of the operating body opposite to the connecting portion.

6. Sanitary pull-out hose fitting according to claim 5, further **characterized in that** the thumb actuation depression protrudes radially outward in relation to a cylinder peripheral outer surface of the handle portion.

7. Sanitary pull-out hose fitting according to claim 5 or 6, further **characterized in that** a normal direction (Nₘ) of the thumb actuation depression extends obliquely in an acute angle (α1) to the cylinder longitudinal axis of the handle portion, when the mixing and shut-off valve is in a closed position.

8. Sanitary pull-out hose fitting according to any one of the claims 5 to 7, further **characterized in that** the operating body has a hood-shaped outer contour (19) with a rectangular upper side (19a), a circular bottom side edge (19b), two opposite narrow side surfaces (19c, 19d) and two opposite broadside surfaces (19e, 19f), and a thumb actuation extension (20) protruding from one of the two broadside surfaces, the thumb actuation depression being provided on the thumb actuation extension.

## Revendications

1. Robinetterie sanitaire à tuyau extractible, comprenant
- un tuyau extractible (1),
- un corps de sortie (2) avec une section de poignée (3) de forme cylindrique, laquelle fait office d'interface poignée-utilisateur et forme une ouverture d'écoulement d'eau sur une première face frontale (4), et avec une section de raccordement (5) couplée au tuyau extractible,
- une vanne de mélange et d'arrêt (6) disposée à l'intérieur de la section de poignée, et
- un élément d'actionnement de vanne (7) sur la section de poignée, qui est commandé par l'utilisateur et qui fait office d'interface actionnement de vanne-utilisateur,
**caractérisée en ce que**
- la section de raccordement (5) fait saillie de la section de poignée (3) du côté périphérique,
- l'élément d'actionnement de vanne (7) est disposé sur une deuxième face frontale (8) de la section de poignée, opposée à la première, de manière à pouvoir pivoter autour de deux axes de pivotement (S1, S2), dont un premier axe de pivotement (S1) s'étend avec une composante de direction principale parallèle à un axe longitudinal de cylindre (Lz) de la section de poignée et un deuxième axe de pivotement (S2) s'étend avec une composante de direction principale perpendiculaire à l'axe longitudinal de cylindre de la section de poignée, et
- l'élément d'actionnement de vanne (7) comprend un corps de commande (16) présentant une cavité d'actionnement par pouce (17).

2. Robinetterie sanitaire à tuyau extractible selon la revendication 1, **caractérisée en outre en ce que** la section de raccordement présente deux entrées de fluide coaxiales séparées (9, 10).

3. Robinetterie sanitaire à tuyau extractible selon la revendication 1 ou 2, **caractérisée en outre en ce que** le tuyau extractible présente deux guidages de fluide coaxiaux séparés (11, 12).

4. Robinetterie sanitaire à tuyau extractible selon la revendication 3, **caractérisée en outre par** un corps de raccordement de tuyau (13) de forme cylindrique à une extrémité (1a) du tuyau extractible opposée à la section de raccordement du corps de sortie, le corps de raccordement de tuyau présentant deux guidages de fluide séparés (14, 15) qui s'étendent coaxialement l'un par rapport à l'autre dans une section (13a) du corps de raccordement de tuyau tournée vers le tuyau et qui sont décalés latéralement l'un par rapport à l'autre dans une section (13b) du corps de raccordement de tuyau détournée du tuyau.

5. Robinetterie sanitaire à tuyau extractible selon l'une des revendications 1 à 4,
**caractérisée en outre en ce que** la cavité d'actionnement par pouce se trouve sur une zone latérale (18) du corps de commande opposée à la section de raccordement.

6. Robinetterie sanitaire à tuyau extractible selon la revendication 5, **caractérisée en outre en ce que** la cavité d'actionnement par pouce dépasse radialement vers l'extérieur par rapport à une surface de cylindre périphérique extérieure de la section de poignée.

7. Robinetterie sanitaire à tuyau extractible selon la revendication 5 ou 6, **caractérisée en outre en ce qu'**une direction normale (Nₘ) de la cavité d'actionnement par pouce s'étend, dans une position de fermeture de la vanne de mélange et d'arrêt, selon un angle aigu (α₁) en oblique par rapport à l'axe longitudinal de cylindre de la section de poignée.

8. Robinetterie sanitaire à tuyau extractible selon l'une des revendications 5 à 7,
**caractérisée en outre en ce que** le corps de commande présente un contour extérieur (19) en forme de capot avec une face supérieure (19a) de forme rectangulaire, un bord de face inférieure (19b) circulaire, deux faces latérales étroites (19c, 19d) opposées et deux faces latérales larges (19e, 19f) opposées, ainsi qu'un prolongement d'actionnement par pouce (20) qui dépasse de l'une des deux faces latérales larges et sur lequel est formée la cavité d'actionnement par pouce.
